# EUROPEAN PATENT APPLICATION

(11) **EP 4 035 849 A1**
(43) Date of publication of application: **03.08.2022**
(21) Application number: 21154228.7
(22) Date of filing: 29.01.2021
(51) Int. Cl.: B25J 15/02, B25J 15/00, B25J 11/00

(54) **GRIPPER**

(71) Applicant: Marel A/S, 8200 Arhus N (DK)
(72) Inventor: DALGAARD, Jens Kongensholm, 8200 Århus N (DK)
(74) Representative: Inspicos P/S

(57) **Abstract**

A gripper (10) for picking up and re-positioning an item (2), comprising: a base (4), a first jaw member (5), and a second jaw member (6) which can grip the item. To stabilize the position of the item when gripped by the jaw members, the gripper comprises a pinching assembly with a first pinching structure (11) and a second pinching structure (12) movable relative to each other to pinch the item between inward surfaces of the pinching structures.

## Description

### INTRODUCTION

The present invention relates to a gripper for gripping items and a method for picking up and re-positioning an item carried by a support surface.

More specifically, the disclosure relates to a gripper comprising:
- a base,
- a first jaw member and a second jaw member.

Each jaw member defines a shaft portion and a foot portion. The shaft portion extends between the base and the foot portion, and the foot portion defines a leading edge.

At least one jaw member is movable relative to the other jaw member to define an open jaw position and a closed jaw position wherein the leading edges are closer to each other in the closed jaw position than in the open jaw position. The jaw members can thereby cooperate to grip the item.

### BACKGROUND

Grippers of the above stated kind are used inter alia in food processing industries for handling food products such as meat.

WO2007093774 discloses a pick and place device for picking up and re-positioning an article carried by a support surface.

Although this pick and place device shows significant advantages over prior art grippers it may be desired to facilitate precise delivery of the items, and particularly to allow precise arrangement of items in a specific location. Particularly, it may be difficult, by use of existing pick and place devices to arrange soft or flexible items tending to stick to the gripper. This may apply inter alia for sliced salmon and other fish or meat products which may stick to the pick and place device and therefore not always be delivered at the intended location.

In handling fragile products such as food products, such as meat and particularly meat from fish, the sliding of the food relative to the gripper may tear the meat and reduce the quality.

### SUMMARY

On the above background it is an object of embodiments of the disclosure to provide an improved gripper, and particularly a gripper facilitating more precise delivery of the items. It is a further object to facilitate a higher throughput by enabling faster movement of a robot handling the gripper, and to protect items being handled by the gripper.

According to these and other objects, embodiments of the disclosure provides a gripper of the kind mentioned in the introduction and with a first pinching structure and a second pinching structure arranged between the shaft portion of first jaw member and the shaft portion of the second jaw member. At least one of the first pinching structure and the second pinching structure is movable relative to the other pinching structure between a closed pinch position and an open pinch position. Each of the first pinching structure and the second pinching structure forms an inward surface facing the inward surface of the other pinching structure and is disposed in spaced relation relative to one another with a distance being larger in the open pinch position than in the closed pinch position.

Accordingly, the pinching structures can pinch the item between the inward surfaces and thereby stabilize the position of the food product. The technical effect of such a stabilization is, that the item is supported and better maintained in its position in the gripper even when moved at high speed and with large acceleration and deceleration.

When the item is released from the gripper, the ability to maintain the position between the pinching structures allows delivery at a well-defined position. The ability to maintain the item in a fixed position in the gripper also protects the item and reduces damages which may occur if the item moves relative to the gripper. For fragile meat products such as pieces of fish, the pinching structure may prevent the pieces from being destroyed during handling by the gripper.

The gripper may particularly be configured for food processing. It may e.g. be made from material accepted for food processing, examples of which include anti corrosive steel materials and polymer materials such as POM, PA, PETG, PEHD, or Teflon etc. The gripper may particularly be configured for operation in combination with a robot. The gripper may operate for picking up and re-positioning food items such as meat. Particularly, the gripper may be used to reposition pieces of fish such as salmon etc.

The support surface may form a conveyor belt and the gripper may be used to grip the items while they are moved by the support surface.

The base may form an interface towards a robot such that the gripper can be moved according to a programmed path e.g. based on vision systems detecting the location of the item to be gripped. The interface may e.g. form a releasable fixation to the robot, e.g. a fixation which can be controlled by pressurized air or other forms of actuators allowing the robot to exchange gripper.

The base may further hold components for controlling the gripper, e.g. pneumatic valves and cylinders for actuating the opening and closing of the jaw members or electric actuators for that purpose. The base may further hold various sensors for sensing the position of the jaw members, pinching structures or for other purposes. It may further comprise camera means for capturing image(s) of the item being gripped and of a location such as a tray or box where the item is to be positioned into.

The first jaw member and the second jaw member may define the shaft portion and the foot portion in one piece or in several assembled pieces. The shaft portion and the foot portion may e.g. extend in different directions, particularly in directions being almost perpendicular, e.g. between 30-120 degrees to each other.

The leading edge may be relatively sharp, preferably with a thickness less than 1 cm. such as less than 2 mm. and it may be formed by a material which is stronger or more wear resistant than the remaining part of the jaw member. In one embodiment, the entire jaw member(s) is formed in one piece from one material, e.g. a polymer material. The leading edge could be made from steel.

The open position of the gripper may be adjustable such that the gap between the leading edges in the open position of the jaw members can be adjusted depending on the size of the item which is gripped. The adjustment may be based e.g. on vision or other forms of sensor feedback identifying a size of the item to be gripped.

The pinching structures may be made in one piece or in several pieces assembled e.g. by bolts etc. The inward surface may be a planar surface or a curved surface or a non-planar surface, e.g. a surface with corrugations reducing the size of the area which is in direct contact with the item being gripped. The spaced relation relative to one another obtained in the open position may be adjustable, e.g. depending on the size of the item being gripped.

The closed position may be determined entirely on the size of the item being gripped meaning that the pinching structures may be free to move towards the closed position until they are stopped by the item which is thereby pinched between the inward surfaces.

At least one of the first jaw member and the second jaw member may be pivotally mounted to the base for rotation about a jaw rotation axis. Alternatively, they may be slidably mounted for sliding in the direction of a jaw sliding axis.

At least one of the first pinching structure and the second pinching structure may be pivotally mounted to the base for rotation about a pinch rotation axis. Alternatively, they may be slidably mounted for sliding in the direction of a pinch sliding axis.

In one embodiment, at least one pinch rotation axis and one jaw rotation axis are coinciding or at least one pinch sliding axis and one jaw sliding axis are parallel such that a jaw member and a corresponding pinch structure rotates about the same axis or slides along the same axis.

In another embodiment, one pinch rotation axis and one jaw rotation axis may be parallel to each other and offset such that the jaw members and the corresponding pinch structure rotate about different rotation axes. In another embodiment, one pinch rotation axis and one jaw rotation axis may be non-parallel and/or offset relative to each other.

For quick and consistent release of the item from the inward surface, the gripper may include a release assembly including a first release structure. The first release structure may be movable away from the inward surface of the first pinching structure from a retracted position to a projecting position. The projecting position may particularly be a position close to midway between the inward surfaces of the first and second pinching structures, e.g. one third or more in the direction towards the other inward surface when the pinching structures are in the open position.

The first release structure may be fixed to the first pinching structure, e.g. at a fixing point located behind the inward surface of the first pinching structure, i.e. facing away from the inward surface of the other pinching structure.

The release assembly may further include a second release structure movable away from the inward surface of the second pinching structure from a retraced position to a projecting position. The second release structure may be fixed to the second pinching structure, e.g. at a fixing point located behind the inward surface of the second pinching structure, i.e. facing away from the inward surface of the other pinching structure.

At least one of the first and second release structures could be formed by an elastically deformable material such that they are movable between the retracted and the projecting position by elastic deformation. In one embodiment, the release structures are made from a blank of a steel material and operates like a spring.

At least a part of one of the first and second release structures could be movable back and forth into a recess in one of the first pinching structure or the second pinching structure. In one embodiment, the inward surfaces have a corrugated structure with a plurality of recesses, and the release structure is movable back and forth into one of the recesses formed by the corrugations.

At least one belt of a flexible material, e.g. a rubber belt, may be wrapped around at least the leading edge of one of the first jaw member and the second jaw member. The belt may be slidable relative to the leading edge of the first jaw member during movement of the jaw member relative to the other jaw member. In this way a part of the belt becomes sandwiched between the jaw member and the item. Since the item is in direct contact with the belt, and the belt prevents contact between the jaw member and the item, the belt thereby prevents sliding friction between the jaw member and the item.

A first of the at least one belts may extend from at least one attachment point on the first pinching structure around the foot portion of the first jaw member and back to the attachment point on the first pinching structure. For that purpose, the inward surface may define a hole through which the belt can be guided.

The belt joins the first pinching structure and the first jaw member during opening and closing and this allows the jaw member to pull the first pinching structure towards its open position when the jaw member opens. The belt thereby defines a connector structure between the jaw member and a corresponding pinching structure.

A second of the at least one belts may extend from at least one attachment point on the second pinching structure around the foot portion of the second jaw member and back to the attachment point on the second pinching structure. The belt thereby defines a connector structure between the jaw member and a corresponding pinching structure.

An elastically deformable structure may be arranged to provide a closing force for moving the first pinching structure and the second pinching structure relative to each other to the closed pinch position. The elastically deformable structure may extend between the first pinching structure and the second pinching structure. The elastically deformable structure may thus bias the inward surfaces towards each other when they are not separated by other means, e.g. by the item being gripped or by a pull caused by the jaw members moving to the open position.

As an alternative or a supplement to the use of the belt(s) as a connector structure for joining a jaw member with a corresponding one of the pinching structures, the gripper may comprise other forms of connectors, e.g. a rod or bolt extending through an opening in a jaw member and in a corresponding one of the pinching structures. The rod may particularly allow free movement of the jaw member without moving the pinching member in a section near the closed position of the jaw member and facilitate joined movement of the jaw member and the pinching structure in a second sector closer to the open position of the jaw member.

In one embodiment, the first pinching structure and the second pinching structure are directed towards the closed pinch position and/or towards the open pinch position by use of a controllable actuator, e.g. a solenoid, or other forms of electrical linear actuators, or a pneumatic actuator.

The aforementioned connector, e.g. in the form of the belts, may be arranged to move the first pinching structure and the second pinching structure towards the open pinch position against the closing force provided either by the elastically deformable structure or by an actuator. However, if the pinching structures are moved by use of an actuator which is controllable, it may not be required to connect the jaw member to a corresponding pinching structure since in that case, the actuator may be used both for the closing and the opening of the pinching assembly.

In a second aspect, the disclosure provides a method of moving an item by use of a robot comprising a gripper according to the first aspect of the disclosure.

The method may comprise the steps of:
- moving at least one of the jaw members relative to the other jaw member to the open jaw position,
- moving the gripper to a position where the item is located between the leading edges,
- moving the pinching structures to the closed pinch position and the jaw members to the closed jaw position, and
- moving the gripper by use of the robot.

The jaw members and the pinching structures could be moved to the closed positions simultaneously, e.g. by use of the connector structure connecting one jaw member with a corresponding one of the pinching structures, e.g. by use of the previously explained belt connecting the jaw member and the pinching structure.

The belt may be allowed to slide relative to the leading edge of the first jaw member during movement of the jaw member relative to the other jaw member such that at least part of the belt become sandwiched between the jaw member and the item. The belt may avoid sliding movement between the sandwiched part of the at least one belt and the item when the jaw member penetrates below the item.

In a third aspect, the disclosure provides a robot, particularly a tripod robot or a so-called Delta parallel robot. The robot is provided with a gripper according to the first aspect of the disclosure.

### BRIEF DESCRIPTION OF DRAWINGS

Embodiments of the invention will be described, by way of example only, with reference to the drawings, in which
Figs. 1a and 1b. illustrate a gripper for picking up and re-positioning an item,
Figs. 2a and 2b. illustrate the gripper including a release structure,
Fig. 3 illustrates a single jaw member,
Fig. 4 illustrates a single pinching structure,
Fig. 5 illustrates a single release structure,
Fig. 6 illustrates the release structure when attached to the pinching structure,
Figs. 7a and 7b illustrate the gripper in a closed position without and with the release structure,
Figs. 8, 9a and 9b illustrate an embodiment of the gripper comprising belts,
Figs. 10 and 11 illustrate an embodiment where the jaw members and pinching structures are slidingly fixed to the base,
Fig. 12 illustrates schematically, a food processing line with a gripper for handling food items, and
Fig. 13 illustrates a robot with a gripper.

### DETAILED DESCRIPTION OF EMBODIMENTS

The detailed description and specific examples, while indicating embodiments of the disclosure, are given by way of illustration only, since various changes and modifications within the spirit and scope of the disclosure will become apparent to those skilled in the art from this detailed description.

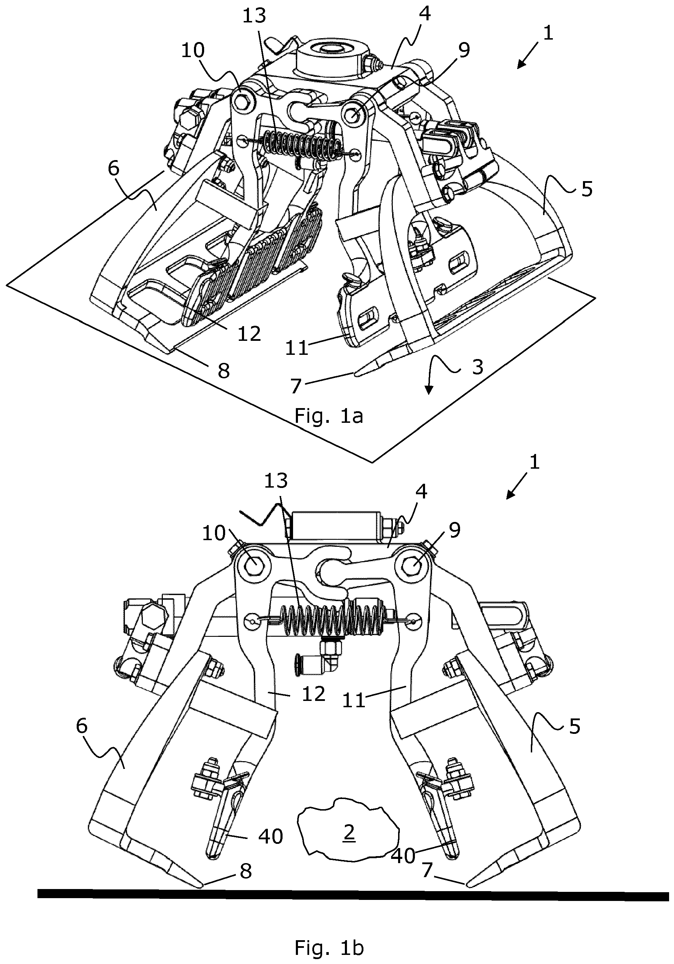

Figs. 1a and 1b. illustrate a gripper 1 for picking up and re-positioning an item 2 carried by a support surface 3. In Fig. 1a, the gripper is illustrated in a perspective view and in Fig. 1b in a sideview. The support surface may particularly be a surface of a conveyor belt, and the gripper could be mounted on a robot for moving items to and/or from the conveyor belt such as from the conveyor belt to boxes or trays. The gripper may e.g. be configured for handling food items such as meat, e.g. pieces of fish such as pieces of salmon etc. To facilitate cleaning, the gripper could be made of non-corrosive materials which can be cleaned with water, e.g. anti-corrosive steel, or polymer materials such as POM, PA, PETG, PEHD, or Teflon etc., or other types of rigid plastic materials.

The gripper 1 comprises a base 4 forming a fixed connection to a robot (not shown) and holding various components, including e.g. air supply for actuators for opening and closing the gripper. The jaw structure of the gripper comprises a first jaw member 5 and a second jaw member 6.

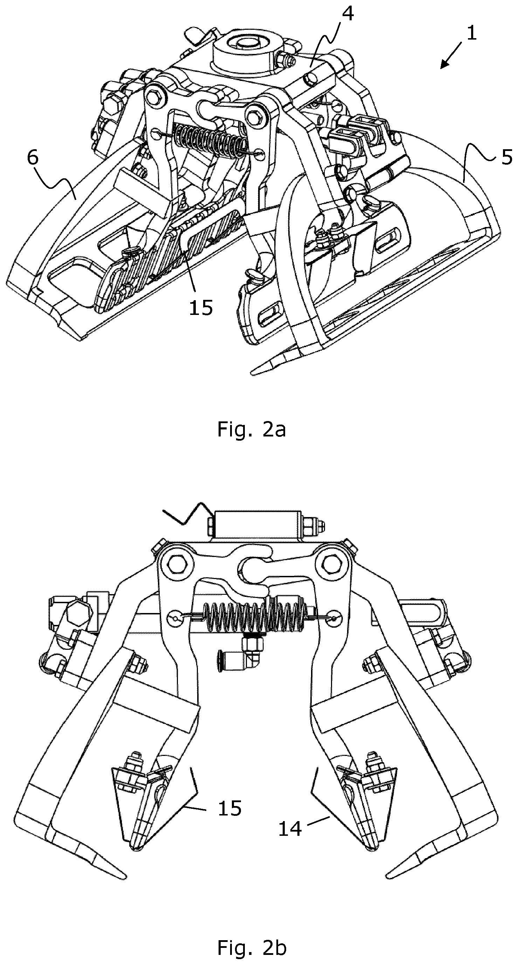

Figs. 2a, 2b illustrate the same gripper when the release assembly with a first and a second release structures 14, 15 are attached.

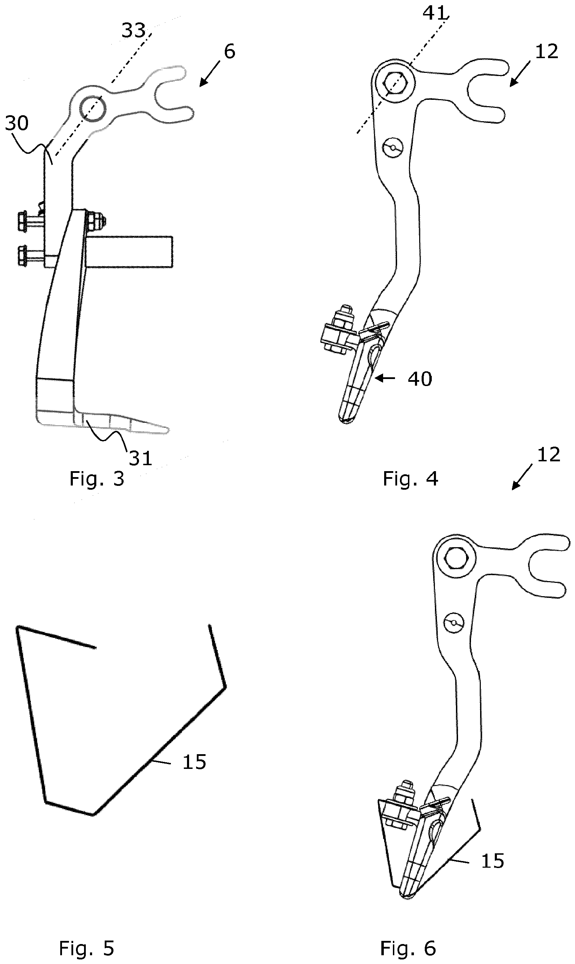

Fig. 3 illustrates a single jaw member. The jaw member 6 comprises a shaft portion 30 and a foot portion 31. The shaft portion extends between the base 4 and the foot portion. In the illustrated embodiment, the foot portion is made in one part with a section of the shaft portion and the rest of the shaft portion is made as a separate part. The two parts are assembled by bolts. In other embodiments, the entire jaw member is made in one piece, or the foot portion is made in one piece assembled to the shaft portion.

The jaw members are moved back and forth between the open and closed position by an actuator attached between the shaft portions of the jaw members. The actuator may particularly be a pneumatic cylinder.

Each foot portion defines a leading edge 7, 8 being sharp pointed and allowing the foot to penetrate between the support surface 3 and the item which is gripped.

The shaft portion of the jaw member is pivotally mounted to the base by the bolt assembly 9, 10 allowing it to rotate about the jaw rotation axis 33 illustrated in Fig. 3.

Both jaw members are movable relative to the base 4 and thereby movable relative to each other. In other embodiments, only one of the jaw members is movable, and the other one is fixed to the base 4, whereby the two jaw members become movable relative to each other.

In Figs, 1a, 1b and 2a, 2b, the jaw members are illustrated in the open jaw position wherein a gap is formed between the leading edges 7, 8 and the gripper is ready to grip an item.

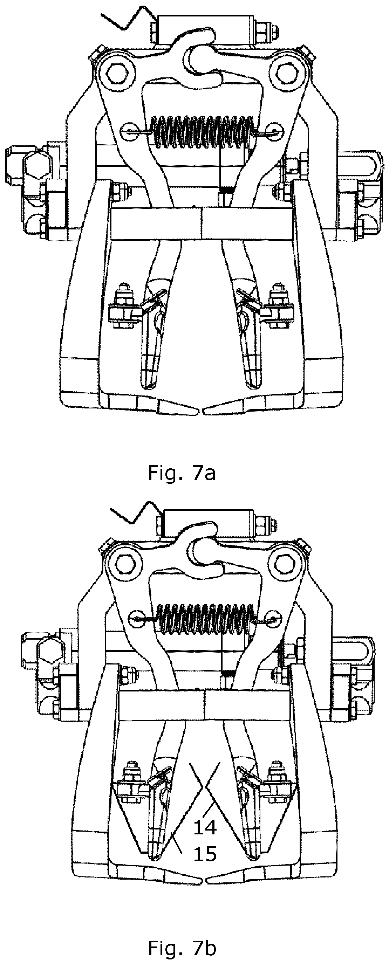

In Fig. 7a, 7b, the jaw members are illustrated in the closed jaw position wherein the leading edges 7, 8 are closer to each. In the illustrated embodiment, the leading edges are directly adjacent each other and there is no gap between them. In other embodiments, there is also a gap between the leading edges in the closed position of the jaw members, but the gap is smaller than in the open position.

A pinching arrangement comprising a first pinching structure 11 and a second pinching structure 12 is arranged between the shaft portions of the first jaw member and the second jaw member.

One of the pinching structures is illustrated in Fig. 4. The pinching structure 12 defines an inward surface 40 facing the inward surface of the other pinching structure. The two inward surfaces 40 are disposed in spaced relation relative to one another.

The pinching structures are attached to the base 4 by the same bolt assembly 9, 10 as the jaw members, and they are therefore both movable relative to the base 4 about a pinch rotation axes, one of which axes 41 is illustrated in Fig. 4. The pinch rotation axes and the jaw rotation axes thereby become coinciding.

The first pinching structure and the second pinching structure therefore become movable relative to each other. In another embodiment, one of the pinching structures is movable relative to the base 4 and the other one is fixed to the base, whereby the pinching structures also become movable relative to each other.

An elastically deformable structure in the form of the spring 13 is arranged to provide a closing force for moving the first pinching structure and the second pinching structure relative to each other to the closed pinch position. The spring 13 extends between the first pinching structure and the second pinching structure at a distance from the bolt assembly 9, 10. Other elastically deformable structures such as rubber bands etc. could be used as an alternative or in addition to the spring. Actuators, e.g. solenoids or pneumatic pistons/cylinder arrangements may be yet another alternative or addition to the illustrated spring.

In Figs. 1 and 2, the pinching structures are located in an open pinch position and in Fig. 7a and 7b the pinching structures are in a closed pinch position with a distance between the inward surfaces being smaller in the closed pinch position than in the open pinch position whereby the pinching structures can pinch the item which is gripped by the gripper.

Figs. 1a and 1b illustrates an embodiment of the gripper without a release structure for releasing the item from the inward surfaces of the pinching structures. Figs. 2a and 2b illustrate the same gripper as Figs. 1a and 1b but including a release assembly comprising a first and a second release structure 14, 15. Each release structure is movable away from the inward surface of the pinching structure from a retraced position to a projecting position located between the inward surface of the first pinching structure and the second pinching structure. The release structure thereby pushes the item away from the inward surfaces and facilitates fast release of items. This may particularly be important related to food items such as meat and particularly fish which may stick to the inward surfaces.

The first and second release structures are formed by an elastically deformable material and thereby moves in response to elastic deformation like a spring. The release structures are deformed towards the inward surfaces when the item is gripped by the gripper, and when the item is released, the spring effect moves the release structures back to the released position between the inward surfaces and thereby pushes the item away from the inward surfaces. Fig. 7b illustrates the embodiment of the gripper with the release structure in the closed e jaw position.

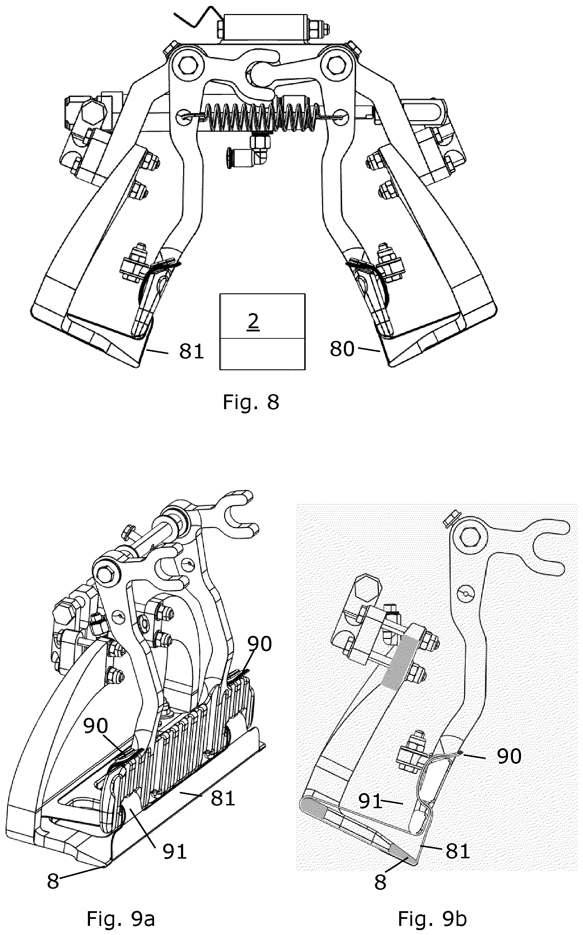

Figs. 8, 9a and 9b illustrate an embodiment of the gripper comprising belts 80, 81 of a flexible material being wrapped around the foot portion of the jaw members and covering the leading edges of the jaw members. The function of the belt is to slide relative to the foot portion and leading edge of the jaw members during movement of the jaw members back and forth between the open and closed positions. Due to this feature, the belt may become sandwiched between the jaw member and the item when the jaw member penetrates below the item, and when the jaw members move below the item there is substantially no relative sliding movement between the sandwiched part of the belt and the item. The belt thereby protects the item against damages which may occur due to the relative sliding between the gripper and the item.

Fig. 9a and 9b illustrate the belt in an enlarged view on one of the jaw members. In this view it is illustrated that the belt extends from attachment points 90 on the first pinching structure around the foot portion of the first jaw member and back to the attachment point on the first pinching structure. The belt passes through an opening 91 in the pinching structure - best seen in the cross section illustrated in Fig. 9b.

The belt thereby forms a connector structure between the jaw member and the corresponding pinching structure and the jaw member can therefore move the pinching structure to the open pinch position when the jaw member moves to the open jaw position.

The aforementioned elastically deformable structure in the form of the spring 13 is arranged to provide the closing force to the pinching arrangement and the connector structure, in this embodiment formed by the belt, which operates in the opposite direction against the force from the spring and opens the pinching arrangement when the jaws open. The pinching force against the item is provided by the springs when the jaw members close and the opening force from the belts disappears. The jaw members and the pinching structures are therefore moved to the closed and open positions simultaneously.

As an alternative to the belt forming the connector structure, the jaw member may be movable within a clearance, and the connector structure could be in the form of a rivet or bolt connection allowing a free movement of the jaw member in a first section of the clearance without moving the corresponding pinching structure, and the connector provides joined movement of the jaw member and the corresponding pinching structure in a second sector of the clearance.

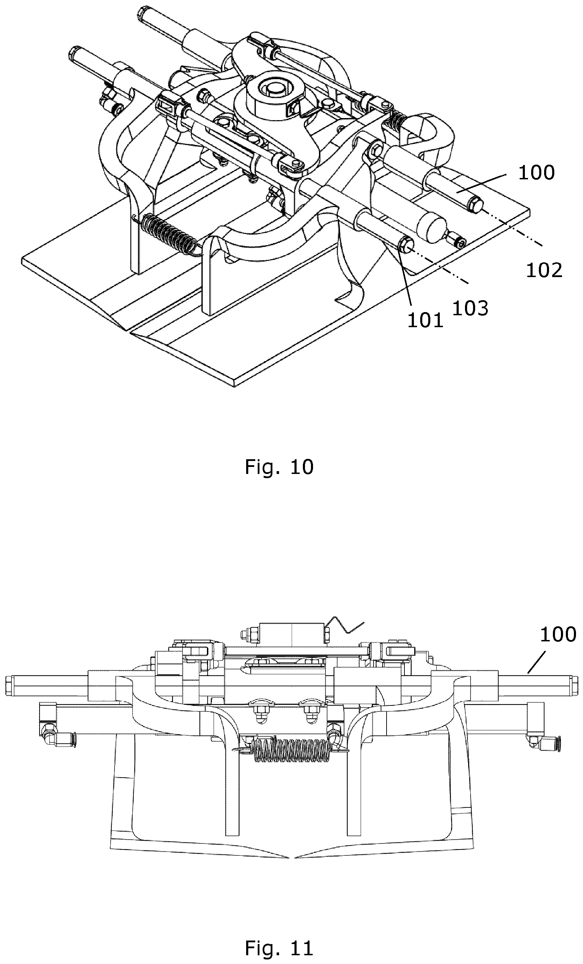

Figs. 10 and 11 illustrate an embodiment where the jaw members and the pinching structures are slidably mounted to the base via the sliding rails 100, 101. The sliding rails allow the jaw members and the pinching structures to slide in the direction of a pinch sliding axis illustrated by the dotted line 102.

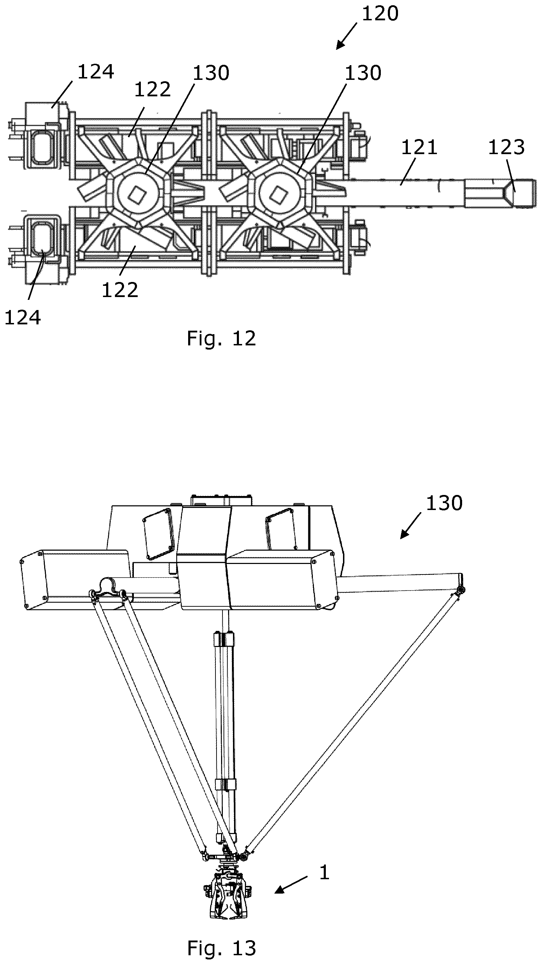

Fig. 12 illustrates a process line 120 in a food processing facility. The food processing line comprises a conveyor belt comprising an inlet section 121 and two outlet sections 122. The conveyors form support surfaces and carry the items from the inlet 123 to the outlets 124 of the process line. A robot station including two robots 130 each having a gripper, is arranged between the inlet and the outlet and handles the food items, and more particularly moves the food items from the inlet section 121 to one of the outlet sections 122.

The robot 130 is a tripod or delta kinematic robot and it is fitted with a gripper 1 of the above explained kind. The Robot with the gripper is illustrated in Fig. 13.

### LIST OF NUMBERED EMBODIMENTS

1. A gripper (1) for gripping an item (2), the gripper (1) comprising:
   - a base (4),
   - a first jaw member (5) and a second jaw member (6) each jaw member defining a shaft portion (30) and a foot portion (31), the shaft portion extending between the base and the foot portion, and the foot portion defining a leading edge (7,8), at least one jaw member being movable relative to the other jaw member to define an open jaw position and a closed jaw position wherein the leading edges (7,8) are closer to each other in the closed jaw position than in the open jaw position, and
   - a first pinching structure (11) and a second pinching structure (12) arranged between the shaft portions of the first jaw member and the second jaw member, at least one of the first pinching structure and the second pinching structure being movable relative to the other pinching structure between a closed pinch position and an open pinch position, each of the first pinching structure and the second pinching structure forming an inward surface (40) facing the inward surface of the other pinching structure and being disposed in spaced relation relative to one another with a distance being larger in the open pinch position than in the closed pinch position.
2. The gripper according to embodiment 1, wherein at least one of the first jaw member and the second jaw member is pivotally mounted to the base (4) for rotation about a jaw rotation axis (33) or slidably mounted for sliding in the direction of a jaw sliding axis (102),
3. The gripper according to embodiment 1 or 2, wherein at least one of the first pinching structure and the second pinching structure is pivotally mounted to the base (4) for rotation about a pinch rotation axis (41) or slidably mounted for sliding in the direction of a pinch sliding axis (103).
4. The gripper according to embodiment 2 and 3, wherein at least one pinch rotation axis and one jaw rotation axis are parallel or coinciding, or wherein at least one pinch sliding axis and one jaw sliding axis are parallel.
5. The gripper according to any of the preceding embodiments, comprising a first release structure (14) movable away from the inward surface of the first pinching structure from a retracted position to a projecting position.
6. The gripper according to any of the preceding embodiments, comprising a second release structure (15) movable away from the inward surface of the second pinching structure from a retraced position to a projecting position.
7. The gripper according to any of embodiments 5 or 6, wherein at least one of the first and second release structures are formed by an elastically deformable material movable between the retracted and the projecting position by elastic deformation.
8. The gripper according to any of embodiments 5-7, wherein at least a part of one of the first and second release structures are movable into a recess in one of the first pinching structure or the second pinching structure.
9. The gripper according to any of the preceding embodiments, comprising at least one belt (80,81) of a flexible material being wrapped around at least the leading edge of one of the first jaw member and the second jaw member, the belt being slidable relative to the leading edge of the first jaw member during movement of the jaw member relative to the other jaw member.
10. The gripper according to embodiment 9, wherein a first of the at least one belts extends from at least one attachment point (90) on the first pinching structure around the foot portion of the first jaw member and back to the attachment point on the first pinching structure.
11. The gripper according to any of the preceding embodiments, wherein a second of the at least one belts extends from at least one attachment point (90) on the second pinching structure around the foot portion of the second jaw member and back to the attachment point on the second pinching structure.
12. The gripper according to any of the preceding embodiments, wherein at least one of the first pinching structure and the second pinching structure has a non-planar shape.
13. The gripper according to any of the preceding embodiments, comprising an elastically deformable structure arranged to provide a closing force for moving the first pinching structure and the second pinching structure relative to each other to the closed pinch position.
14. The gripper according to embodiment 13, wherein the elastically deformable structure extends between the first pinching structure and the second pinching structure.
15. The gripper according to any of the preceding embodiments, comprising at least one connector structure between at least one of the jaw members and a corresponding one of the pinching structures to move the pinching structure to the open pinch position by movement of the jaw member to the open jaw position.
16. The gripper according to any of embodiments 9-11 and embodiment 15, wherein one of the at least one belts (80,81) constitute the connector structure.
17. The gripper according to embodiment 15 or 16, wherein the jaw member is movable within a clearance, and the connector structure allows a free movement of the jaw member in a first section of the clearance without moving the corresponding pinching structure and the connector provides joined movement of the jaw member and the corresponding pinching structure in a second sector of the clearance.
18. The gripper according to any of the preceding embodiments, comprising an actuator arranged to move the first pinching structure and the second pinching structure towards the closed pinch position.
19. The gripper according to any of embodiments 13-14 and any of embodiments 15-18, wherein the connector is arranged to move the first pinching structure and the second pinching structure towards the open pinch position against the closing force.
20. A method of moving an item by use of a robot comprising a gripper according to any of embodiment 1-19, the method comprising:
   - moving at least one of the jaw members relative to the other jaw member to the open jaw position,
   - moving the gripper to a position where the item is located between the leading edges,
   - moving the jaw members to the closed jaw position and the pinching structures to the closed pinch position, and
   - moving the gripper by use of the robot.
21. The method according to embodiment 20, wherein the jaw members and the pinching structures are moved to the closed positions simultaneously.
22. The method according to embodiment 20 or 21, wherein at least one belt (80,81) of a flexible material is wrapped around at least the leading edge of one of the first jaw member and the second jaw member, and wherein the belt is allowed to slide relative to the leading edge of the first jaw member during movement of the jaw member relative to the other jaw member such that at least part of the belt become sandwiched between the jaw member and the item when the jaw member penetrates below the item, and such that there is substantially no relative sliding movement between the sandwiched part of the at least one belt and the item.
23. A robot (130) comprising a gripper (1) according to any of embodiments 1-19 and configured for picking up and re-positioning an item carried by a support surface.

## Claims

1. A gripper (1) for gripping an item (2), the gripper (1) comprising:
- a base (4),
- a first jaw member (5) and a second jaw member (6) each jaw member defining a shaft portion (30) and a foot portion (31), the shaft portion extending between the base and the foot portion, and the foot portion defining a leading edge (7,8), at least one jaw member being movable relative to the other jaw member to define an open jaw position and a closed jaw position wherein the leading edges (7,8) are closer to each other in the closed jaw position than in the open jaw position, and
- a first pinching structure (11) and a second pinching structure (12) arranged between the shaft portions of the first jaw member and the second jaw member, at least one of the first pinching structure and the second pinching structure being movable relative to the other pinching structure between a closed pinch position and an open pinch position, each of the first pinching structure and the second pinching structure forming an inward surface (40) facing the inward surface of the other pinching structure and being disposed in spaced relation relative to one another with a distance being larger in the open pinch position than in the closed pinch position.

2. The gripper according to claim 1, wherein at least one of the first jaw member and the second jaw member is pivotally mounted to the base (4) for rotation about a jaw rotation axis (33) or slidably mounted for sliding in the direction of a jaw sliding axis (102),

3. The gripper according to claim 1 or 2, wherein at least one of the first pinching structure and the second pinching structure is pivotally mounted to the base (4) for rotation about a pinch rotation axis (41) or slidably mounted for sliding in the direction of a pinch sliding axis (103).

4. The gripper according to claim 2 and 3, wherein at least one pinch rotation axis and one jaw rotation axis are parallel or coinciding, or wherein at least one pinch sliding axis and one jaw sliding axis are parallel.

5. The gripper according to any of the preceding claims, comprising a first release structure (14) movable away from the inward surface of the first pinching structure from a retracted position to a projecting position.

6. The gripper according to any of the preceding claims, comprising a second release structure (15) movable away from the inward surface of the second pinching structure from a retraced position to a projecting position.

7. The gripper according to any of claims 5 or 6, wherein at least one of the first and second release structures are formed by an elastically deformable material movable between the retracted and the projecting position by elastic deformation.

8. The gripper according to any of claims 5-7, wherein at least a part of one of the first and second release structures are movable into a recess in one of the first pinching structure or the second pinching structure.

9. The gripper according to any of the preceding claims, comprising at least one belt (80,81) of a flexible material being wrapped around at least the leading edge of one of the first jaw member and the second jaw member, the belt being slidable relative to the leading edge of the first jaw member during movement of the jaw member relative to the other jaw member.

10. The gripper according to claim 9, wherein a first of the at least one belts extends from at least one attachment point (90) on the first pinching structure around the foot portion of the first jaw member and back to the attachment point on the first pinching structure.

11. The gripper according to any of the preceding claims, wherein a second of the at least one belts extends from at least one attachment point (90) on the second pinching structure around the foot portion of the second jaw member and back to the attachment point on the second pinching structure.

12. The gripper according to any of the preceding claims, wherein at least one of the first pinching structure and the second pinching structure has a non-planar shape.

13. The gripper according to any of the preceding claims, comprising an elastically deformable structure arranged to provide a closing force for moving the first pinching structure and the second pinching structure relative to each other to the closed pinch position.

14. The gripper according to claim 13, wherein the elastically deformable structure extends between the first pinching structure and the second pinching structure.

15. The gripper according to any of the preceding claims, comprising at least one connector structure between at least one of the jaw members and a corresponding one of the pinching structures to move the pinching structure to the open pinch position by movement of the jaw member to the open jaw position.
